# FASCICULE DE BREVET EUROPEEN

(11) **EP 1 111 908 B1**
(45) Date de publication et mention de la délivrance du brevet: **05.11.2008**
(21) Numéro de dépôt: 00403603.4
(22) Date de dépôt: 20.12.2000
(51) Int. Cl.: H04N 3/15

(54) **Dispositif photosensible à accumulation de charges et lidar incorporant un tel dispositif**
Lichtempfindliche ladungsgekoppelte Vorrichtung mit Ladungsakkumulation und Lidar mit einer solchen Vorrichtung
Charge coupled photosensitive device with charge accumulation and Lidar incorporating such a device

(30) Priorité: 24.12.1999 FR 9916482
(43) Date de publication de la demande: 27.06.2001
(73) Titulaire: EADS ASTRIUM SAS, 31402 Toulouse Cedex 4 (FR)
(72) Inventeur: Fabre, Frédéric, 31000 Toulouse (FR); Morancais, Didier, 31850 Beaupuis (FR); Tulet, Michel, 31130 Balma (FR)
(74) Mandataire: Loisel, Bertrand

(56) Documents cités:
- EP-A- 0 907 284
- US-A- 5 166 800

## Description

La présente invention a pour objet un dispositif photosensible à couplage et accumulation de charges électriques, permettant d'analyser un signal lumineux. Elle trouve une application particulièrement importante, bien que non exclusive, dans les appareils dits "lidars" permettant de mesurer la distance d'obstacles ou de milieux sur lesquels on provoque la rétrodiffusion ou la réflexion d'impulsions lumineuses brèves. De tels lidars sont notamment utilisés pour déterminer l'altitude et la position des nuages à partir de mesure de temps de vol d'impulsions laser rétro-diffusées par la surface des nuages. Un type particulier de lidar, dit "lidar vent", permet de mesurer la vitesse moyenne du vent dans des tranches d'altitude, en utilisant le décalage de longueur d'onde provoqué par l'effet Doppler.

On a déjà proposé (document FR-A-2 735 935) un dispositif photosensible à couplage et stockage de charges permettant d'analyser un signal lumineux, incorporant un photodétecteur matriciel. Ce détecteur, dit CCD, présente de nombreux avantages, surtout lorsqu'une sensibilité élevée est requise. Les détecteurs CCD peuvent être réalisés de façon à avoir une efficacité quantique élevée depuis l'ultraviolet jusqu'au proche infrarouge ; ils permettent de regrouper sur une même puce des fonctions d'intégration de charges et de stockage analogique. Ils permettent de transférer des charges à haute fréquence. Leur bruit de lecture est faible.

Dans le cas d'un lidar vent, le dispositif est associé à un spectromètre permettant d'associer chaque colonne de la zone image à un décalage spectral, et donc à une vitesse, différente.

Des perfectionnements au dispositif ci-dessus sont décrits dans la demande de brevet EP-A-0 907 284 à laquelle on pourra se reporter ; ils permettent une accumulation des charges de façon analogique, dans des moyens à couplage de charge, permettant de ne lire le dispositif qu'à des intervalles correspondant à plusieurs durées d'observation, donc de plusieurs tirs successifs dans le cas d'un lidar.

Le dispositif photosensible à couplage et accumulation de charges, permettant d'analyser un signal lumineux, suivant cette demande EP-A-0 907 284, comprend:
- une zone image constituée par une matrice de M lignes et N colonnes de sites photosensibles, destinée à recevoir le signal lumineux, pendant des périodes d'acquisition successives,
- une première zone mémoire constituée par une matrice de P lignes et N colonnes de sites non photosensibles, destinée à recevoir, dans chaque site d'une première ligne, constituant ligne d'intégration, la somme des charges dans une colonne respective de la zone image, à l'issue de chacune de périodes d'acquisition successives,
- un registre de lecture ayant une seule ligne de N sites, destinée à recevoir en parallèle les charges stockées dans la dernière ligne de la première zone mémoire
- une seconde zone mémoire, à P lignes et N colonnes, destinée à recevoir en parallèle les charges admises aux N sites du registre de lecture et à les ramener à N sites d' une même ligne de la zone image ou de la première zone mémoire, permettant d'accumuler, dans chaque ligne de la première zone mémoire, les charges accumulées au cours d'une période d'observation et provenant de plusieurs sommations successives, et
- des moyens de cadencement permettant :
   - à l'issue de chaque période d'acquisition, de transférer,en une durée courte par rapport à la période d'acquisition, les charges stockées dans tous les sites de chaque colonne de la zone image le long de la colonne vers un site respectif d'une ligne d'intégration pour les y sommer,
   - pendant chaque période d'observation, de transférer les charges accumulées dans chaque site de la ligne d'intégration, pas à pas, à la cadence des acquisitions, le long des colonnes de la zone mémoire, vers le registre de lecture, et
   - de lire le registre de lecture après plusieurs périodes d'observation.

On peut ainsi réaliser en particulier un rebouclage sur la zone image ou la première zone mémoire, permettant d'accumuler dans chaque ligne de la première zone mémoire les charges provenant de plusieurs sommations successives.

Dans un premier cas, le registre de lecture comporte au moins N sites supplémentaires vers lesquels sont transférées les charges provenant de la dernière ligne de la première zone mémoire en vue de la réintroduction dans la seconde zone mémoire et la seconde zone mémoire est prévue pour permettre le transfert série des charges accumulées qu'elle contient vers une zone d'intégration. Dans cette zone seront accumulées, à l'issue de chaque période d'acquisition, les contenus des lignes correspondantes de la seconde zone mémoire et de la zone image. La ligne d'intégration est constituée par un registre à décalage d'au moins 2N sites, ayant N sites recevant en parallèle le contenu de la dernière ligne de la seconde zone mémoire et N sites capables de faire la sommation des charges qu'ils contiennent des charges transférées de la zone image.

Cette solution a l'avantage d'éviter que des niveaux de charge élevés sur une ligne donnée viennent perturber des niveaux de charge plus faibles présents dans d'autres lignes. Mais son implémentation soulève des difficultés d'implantation des électrodes d'horloge de séquencement, pour les N sites qui reçoivent les charges transférées de la zone image.

Dans un deuxième cas, prévu dans la demande EP-A-0 907 284 la seconde zone mémoire est prévue de façon que les charges contenues dans chaque ligne de cette seconde zone mémoire et qui proviennent des lignes correspondantes de la première zone mémoire, puissent être transférées dans les lignes correspondantes de la zone image avant chaque période d'observation.

Il est seulement nécessaire de prévoir un cadencement ayant des sorties supplémentaires de commande des transferts vers la seconde mémoire auxiliaire et à partir d'elle.

La réalisation reste simple. Mais les charges sont transférées par un mouvement de va-et-vient au travers de la zone image. Les imperfections du transfert entre lignes font que, dans certaines applications, il y a pollution d'échantillons temporels de faible flux par la ligne la plus illuminée, par suite d'un « traînage » des charges.

L'invention vise notamment à fournir un dispositif écartant les limitations ci-dessus dans une large mesure.

Dans ce but, l'invention propose un dispositif suivant le préambule de la revendication 1, comme connu par EP-A-0 907 284, et qui se caractérise par les mesures techniques de la partie caractérisante de la revendication 1. Des caractéristiques techniques supplémentaires du dispositif et d'un lidar l'incorporant sont définies respectivement dans la revendication 2 et les revendications 3 et 4.

L'invention a aussi pour objet un radiomètre rapide à faible flux, comprenant un dispositif suivant la revendication 1, utilisant les zones images et mémoire du dispositif en récepteur de faibles niveaux de lumière.

Les caractéristiques ci-dessus ainsi que d'autres apparaîtront mieux à la lecture de la description qui suit d'un mode particulier de réalisation, donné à titre d'exemple non limitatif. La description se réfère aux dessins qui l'accompagnent, dans lesquels :
- la figure 1 est un schéma de principe d'un lidar vent conforme à un mode de réalisation de l'invention ; et
- la figure 2 est une vue schématique en plan d'un dispositif photosensible selon un mode de réalisation de l'invention,
- la figure 3 est un schéma synoptique des étapes successives de fonctionnement.

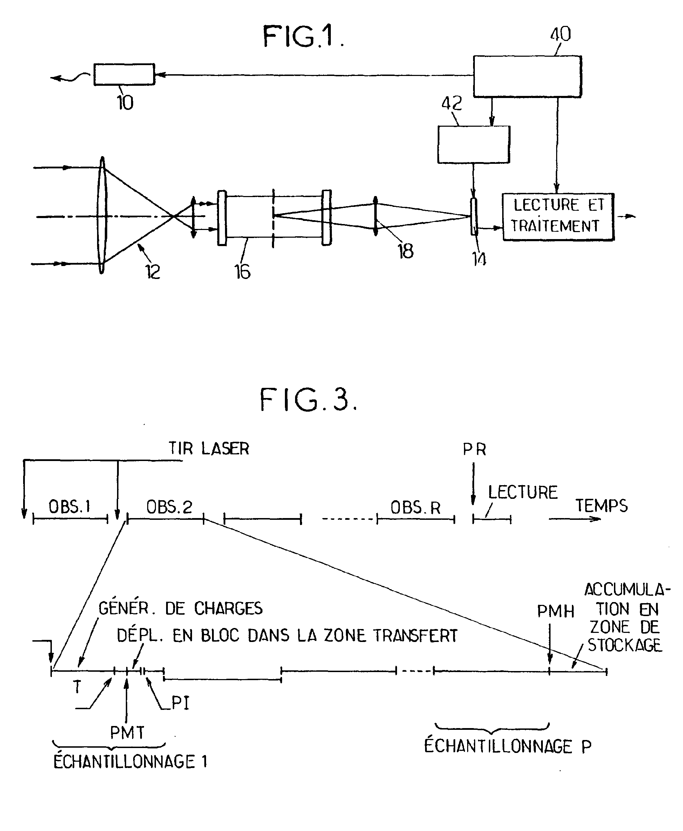

Le lidar est schématisé sur la figure 1. Il comprend une source 10 d'impulsions lumineuses brèves (typiquement 20 à 30 ns), généralement constituée par un laser à grenat. Le flux lumineux rétrodiffusé, qui présente un décalage de longueur d'onde δλ proportionnel à la vitesse de l'obstacle ou du milieu donnant lieu à rétrodiffusion, est recueilli par une optique télescopique 12 qui fournit un faisceau parallèle à un filtre interférentiel 16, qui peut notamment être un interféromètre de Fizeau. Cet interféromètre a pour fonction de générer une frange linéaire dont la position est décalée, par rapport à un plan médian, en fonction du décalage spectral δλ. Une optique de sortie 18 forme l'image de la ou des franges de sortie de l'interféromètre sur la zone image d'un détecteur CCD 14.

Un cadenceur 40 commande le laser 10 et un générateur 42 des signaux nécessaires au transfert de charges dans le détecteur CDD.

En général le dispositif comportera un registre à décalage à N ou 2N positions à entrées parallèles et à sortie série sur un amplificateur de lecture, placé de façon à recevoir successivement le contenu de toutes les P lignes de la zone de stockage.

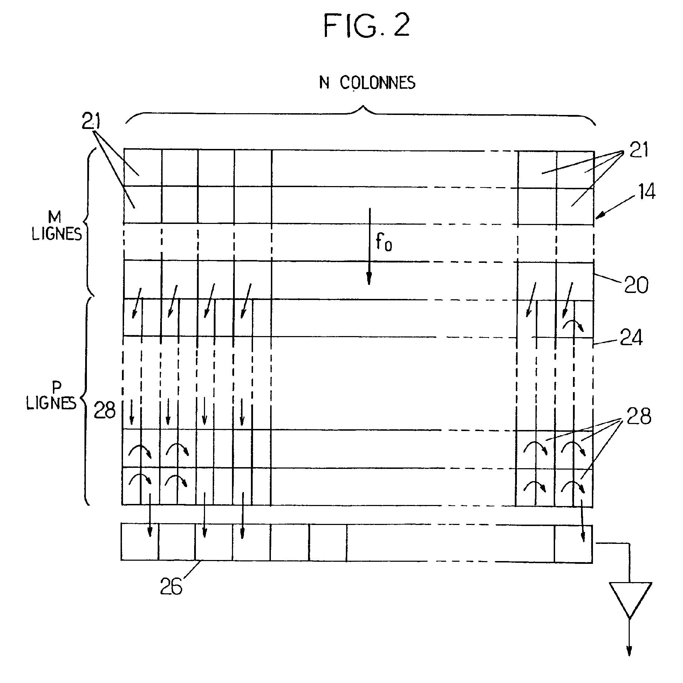

Le dispositif photosensible 14 dont la constitution est montrée en figure 2 comporte une zone image 20 ayant une matrice de M lignes et N colonnes de sites photosensibles 21. La zone image est suivie, dans le sens f₀ de transfert des charges en parallèle, d'une mémoire 24, constituée par une matrice à P lignes de sites non photosensibles (par exemple masqués par un dépôt d'aluminium ou un cache mécanique) et d'un registre de lecture 26 à entrées parallèles et à sortie série dans le sens indiqué par la flèche f₁.

La mémoire peut être regardée comme constituée d'une zone de transfert et d'une zone de stockage.

La zone de transfert est constituée par une matrice de P lignes et N colonnes de sites non photosensibles. La première ligne de cette zone de transfert constitue une zone d'intégration des charges provenant de la zone image.

La zone de stockage est constituée de NXP sites ou pixels 28 répartis en P lignes et N colonnes. Chaque colonne est adjacente à une colonne respective de la zone de transfert. Chaque site de la zone de stockage est prévu pour recevoir les charges contenues dans le site adjacent de la zone de transfert et les cumuler avec celles qu'il contient déjà.

Le registre de lecture 26 représenté comporte N sites (ou 2 N sites), disposés de façon à recevoir en parallèle les charges transférées de la dernière ligne de la zone de stockage.

La zone image 20, la mémoire 24 et le registre 26 sont implantés dans un support semi-conducteur qui porte les électrodes nécessaires pour effectuer les transferts indiqués par des flèches sur la figure 2. Ces électrodes appartiennent à la matrice CCD et sont reliées à des moyens de cadencement comprenant le cadenceur 40 et le générateur 42.

Les caractéristiques suivantes peuvent être considérées comme représentatives, dans le cas d'un lidar vent ayant un laser fournissant des impulsions de 20 ns et ayant une durée d'acquisition de 8 *µ*s:
- Détecteur monolithique sur silicium, avec masquage par un dépôt d'aluminium ou un masque séparé, et sites carrés de 20 *µ*m de côté
- M = N = 16 pixels
- P = 25 pixels
- Registres de 2N + 1 = 33 sites
- Etage de sortie 30 à gain de 10 *µ*V/e⁻

La frange d'interférence a une position décalée de l'axe d'une distance δx proportionnelle à δλ, avec une répartition énergétique qui peut la conduire à recouvrir plusieurs colonnes. Une localisation avec une précision meilleure qu'un pixel (largeur d'un site) peut être obtenue par calcul de barycentre.

Une mesure à l'aide d'un dispositif du genre qui vient d'être décrit met en oeuvre une accumulation temporelle des résultats de plusieurs observations successives, typiquement 10 à 2000 dans le cas d'un lidar vent. Les étapes successives sont alors les suivantes :
1. Chacune des R observations successives, chaque observation faisant suite à un tir laser dans le cas d'un lidar, comporte successivement une accumulation, puis un transfert.
   (a1) Au cours d'un premier échantillonnage temporel, des charges sont générées par la lumière reçue par la zone image 20 dans les sites de cette zone pendant une durée T qui est choisie, dans le cas d'un lidar, en fonction de la résolution en distance recherchée.
   (b1) A l'issue de la durée T, les charges sont déplacées le long de chaque colonne pour que les charges de tous les sites d'une colonne donnée se cumulent dans le site de la première ligne de la zone de transfert appartenant à la même colonne, et cela en une durée brève par rapport à T.
   (c ) Au cours de chaque échantillonnage temporel suivant, qui correspond à l'analyse d'une région plus éloignée dans le cas d'un lidar, il y a :
      - répétition de l'accumulation des charges dans la zone image, comme dans l'étape (a1) ;
      - décalage d'une ligne des charges contenues dans la zone de transfert, ligne à ligne, vers le bas ; et
      - comme dans l'étape (b1), déplacement des charges pour qu'elles se cumulent dans la première ligne de la zone de transfert précédemment vidée par le décalage.
      On effectue ainsi P échantillonnages temporels, à l'issue de chacun desquels les sites des P lignes de la zone transfert contiennent des charges correspondant à des périodes T successives.
   (d) on transfère le contenu de chaque site de la zone de transfert vers le site 28 de la zone de stockage qui lui est adjacent, comme indiqué par des flèches courbes sur la fig. 2.
2. Chacune des R-1 observations suivantes fait suite à un nouveau tir laser dans le cas d'un lidar . Les retards temporels entre le tir et les périodes d'accumulation de charges de durées T sont les mêmes que pendant la première observation. Mais au cours de l'étape (d) il y a addition des charges transférées aux charges déjà présentes dans les sites 28 de la zone de stockage.
3. Enfin, on effectue une lecture ligne à ligne par un étage de sortie, dans le cas illustré à l'aide du registre à décalage 26 à entrées parallèles et à sortie série sur l'amplificateur de lecture.
   Parmi les avantages de l'architecture qui vient d'être décrite, on peut relever la faible influence des pertes lors des transferts entre sites. Un électron généré dans la zone image subit au plus M+P+N+1 (ou M+P+2N+1) transferts, quel que soit le nombre R des observations. Par ailleurs l'architecture globale du composant est simple, aussi bien du pont de vue du nombre de zones différentes que de l'implantation des électrodes de déplacement des charges.
   La synoptique de fonctionnement peut être celui montré en figure 3. Les commandes appliquées aux électrodes sont alors :
   - PMT =: transfert en bloc, ligne par ligne, dans la zone transfert.
   - P1 =: accumulation des charges de la zone image dans la première ligne de la zone transfert
   - PMS =: commande de transfert, colonne à colonne, de la zone transfert à la zone image, et intégration
   - PR =: transfert vers le registre de lecture.

Un intérêt supplémentaire du dispositif qui vient d'être décrit est que toute la partie CCD peut être également utilisée comme détecteur pour des applications de photométrie rapide sur faible niveau de lumière. Ainsi la même partie peut alternativement être mise en oeuvre avec des moyens de cadencement tels que définis plus haut et dans un récepteur de Rayleigh tel que celui décrit dans la demande FR 89 08462 du CNRS.

## Revendications

1. Dispositif photosensible à couplage et accumulation de charges, permettant d'analyser un signal lumineux, comprenant:
- une zone image (20) constituée par une matrice de M lignes et N colonnes de sites photosensibles (21), destinée à recevoir le signal lumineux,
**caractérisé en ce qu'**il comprend de plus :
- une zone mémoire (24) ayant :
- une zone de transfert (24) constituée par une matrice de P lignes et N colonnes de sites non photosensibles, destinée à recevoir dans chaque site d'une première ligne, constituant une ligne d'intégration, la somme des charges dans une colonne respective de la zone image (20), à l'issue de chacune des périodes d'acquisition successives, et
- une zone de stockage à P lignes et N colonnes dont chaque colonne est adjacente à une colonne respective de la zone de transfert et dont chaque site (28) est prévu pour recevoir les charges contenues dans un site adjacent de la zone de transfert et les cumuler avec celles qu'elle contient déjà, et
- des moyens de cadencement permettant :
au cours de chacune des R périodes d'observation successives,
d'effectuer P échantillonnages temporels successifs, chacun d'eux par intégration des charges dans la zone image (20) sur une durée T, et, en un délai court par rapport à la durée T, transfert ultérieur des charges de tous les sites d'une même colonne de la zone image (20) dans la première ligne de la zone de transfert après déplacement des charges de chaque ligne de la zone de transfert à la ligne suivante, et
à l'issue des P échantillonnages, de transférer les charges de chaque ligne de la zone de transfert vers le site (28) adjacent de la zone de stockage, et
après les R périodes d'observation, de commander une lecture ligne à ligne du contenu de la zone de stockage.

2. Dispositif suivant la revendication 1, **caractérisé en ce qu'**il comprend un registre (26) à décalage à N ou 2N positions, à entrées parallèles et à sortie série sur un amplificateur de lecture, placé de façon à recevoir successivement le contenu de toutes les P lignes de la zone de stockage.

3. Lidar comprenant :
- une source impulsionnelle de lumière (10),
- un dispositif (14) selon la revendication 1 ou 2 placé pour recevoir la lumière réfléchie ou rétrodiffusée sur des obstacles ou milieux, dans lequel les moyens de cadencement sont prévus pour provoquer l'accumulation de charges pendant des périodes d'acquisition successives correspondant à des temps d'aller-retour de la lumière différents et pour provoquer des observations successives à la cadence d'émission d'impulsions par la source.

4. Lidar vent selon la revendication 3, **caractérisé en ce qu'**il comporte un interféromètre (16) agencé pour diriger vers différentes colonnes de la zone image (20) des composantes spectrales de longueur d'onde différentes.

5. Radiomètre rapide à faible flux, comprenant un dispositif (14) suivant la revendication 1, utilisant les zones image (20) et mémoire (24) du dispositif (14) en récepteur de faibles niveaux de lumière.

## Claims

1. A photosensitive device implementing charge coupling and accumulation for analyzing a light signal, comprising:
- an image zone (20) constituted by a matrix of M rows and N columns of photosensitive sites (21) for receiving the light signal
**characterized in that** it further comprises:
- a memory zone (24) having:
- a transfer zone (24) constituted by a matrix of P rows and N columns of non-photosensitive sites for receiving, in each site of a first row, constituting an integration row, the sum of the charges in a respective column of the image zone (20) at the end of each one of a plurality of successive acquisition periods; and
- a storage zone of P rows an N columns, in which each column is adjacent to a respective column of the transfer zone and each site (28) is arranged to receive the charges contained in an adjacent site of the transfer zone and to accumulate them with the charges it contains already; and
- clocking means for:
during each of R successive observation periods,
causing P successive time samplings, each of which by integration of the charges in the image zone (20) during a duration T and, in a period that is short relative to the duration T, subsequently transferring the charges from all of the sites of a single column of the image zone (20) into the first row of the transfer zone after moving charges of each row from the transfer zone to the following row; and, after said P samples have been taken, causing transfer of the charges of each row of the transfer zone to the adjacent site (28) of the storage zone, and
after the R observation periods, causing the storage zone to be read out row by row.

2. Device according to claim 1, **characterized in that** it comprises a shift register (26) with N or 2N positions with parallel input, and a serial output connected to a read amplifier placed so as to receive contents of all P rows of the storage zone in succession.

3. Lidar comprising:
- a source of short light pulses (10),
- a device (14) according to claim 1 or 2, located to receive the reflected or backscatted light over obstacles or media wherein the clocking means are arranged for causing accumulation of charges during a plurality of successive acquisition periods of time corresponding to different time durations of a back and forth light travel and for causing successive observations at a rate of transmission of said light pulses by the source.

4. Wind lidar according to claim 3, **characterized in that** it comprises an interferometer (16) arranged to direct spectral components of different wave length to different columns of the image zone (20).

5. Fast low level radiometer comprising a device (14) according to claim 1, using the image (20) and memory zones (24) of the device (14) as a detector of low levels of light.

## Patentansprüche

1. Lichtempfindliche Vorrichtung mit Koppeln und Sammeln von Ladungen, die es erlaubt, ein Lichtsignal zu analysieren, Folgendes aufweisend:
- eine Bildzone (20), die aus einer Matrix zu M Zeilen und N Spalten lichtempfindlicher Stellen (21) besteht, die dazu bestimmt ist, das Lichtsignal zu empfangen,
**dadurch gekennzeichnet, dass** sie ferner Folgendes aufweist:
- eine Speicherzone (24) mit:
- einer Transferzone (24), die aus einer Matrix zu P Zeilen und N Spalten nicht lichtempfindlicher Stellen besteht, die dazu bestimmt ist, in jeder Stelle einer ersten Zeile, die eine Integrationszeile bildet, nach jeder der aufeinander folgenden Erfassungsphasen die Summe der Ladungen in einer jeweiligen Spalte der Bildzone (20) zu empfangen, und
- einer Speicherzone zu P Zeilen und N Spalten, von welcher jede Spalte neben einer jeweiligen Spalte der Transferzone liegt, und von welcher jede Stelle (28) vorgesehen ist, um die Ladungen zu empfangen, die in einer benachbarten Stelle der Transferzone enthalten sind, und sie mit denen zu summieren, die sie bereits enthält, und
- Mitteln zur Taktversorgung, die Folgendes erlauben:
im Laufe jeder der R aufeinanderfolgenden Beobachtungsperioden Ausführen von P aufeinanderfolgenden zeitlichen Abtastungen jeweils durch Integration der Ladungen in der Bildzone (20) über eine Dauer T, und innerhalb einer kurzen Frist im Vergleich zu der Dauer T, späterer Transfer der Ladungen aller Stellen einer gleichen Spalte der Bildzone (20) in die erste Zeile der Transferzone nach dem Verlagern der Ladungen jeder Zeile der Transferzone zur nächsten Zeile, und nach den P Abtastungen, Übertragen der Ladungen jeder Zeile der Transferzone zu der benachbarten Stelle (28) der Speicherzone, und
nach den R Beobachtungsperioden, Befehlen eines zeilenweisen Lesens des Inhalts der Speicherzone.

2. Vorrichtung nach Anspruch 1, **dadurch gekennzeichnet, dass** sie ein Schieberegister (26) zu N oder 2 N Positionen aufweist, mit parallelen Eingängen und seriellem Ausgang auf einem Leseverstärker, der derart angeordnet ist, dass er nacheinander den Inhalt aller der P Zeilen der Speicherzone erhält.

3. Lidar mit:
- einer Impulslichtquelle (10),
- einer Vorrichtung (14) nach Anspruch 1 oder 2, die angeordnet ist, um das reflektierte oder auf Hindernissen oder Milieus rückgestreute Licht zu empfangen, in der die Taktversorgungsmittel vorgesehen sind, um das Sammeln von Ladungen während aufeinanderfolgender Erfassungsperioden, die unterschiedlichen Hin- und Rücklaufzeiten des Lichts entsprechen, zu verursachen, und um aufeinanderfolgende Beobachtungen mit dem Impulssendetakt der Quelle zu bewirken.

4. Windlidar nach Anspruch 3, **dadurch gekennzeichnet, dass** er ein Interferometer (16) aufweist, das eingerichtet ist, um spektrale Komponenten mit unterschiedlicher Wellenlänge zu unterschiedlichen Spalten der Bildzone (20) zu lenken.

5. Schnelles Radiometer mit schwachem Strom, das eine Vorrichtung (14) nach Anspruch 1 aufweist, die die Bildzone (20) und die Speicherzone (24) der Vorrichtung (14) als Empfänger niedriger Lichtpegel verwendet.
